(19) Europäisches Patentamt
European Patent Office
Office européen des brevets

(11) **EP 2 613 295 B1**

(12) **EUROPEAN PATENT SPECIFICATION**

(45) Date of publication and mention
of the grant of the patent:
**08.03.2017 Bulletin 2017/10**

(51) Int Cl.:
*G06T 15/04* (2011.01)    *G06T 11/00* (2006.01)

(21) Application number: **12150082.1**

(22) Date of filing: **03.01.2012**

(54) **Geographical map landscape texture generation on the basis of hand-held camera images**

Geografische Kartenquerformat-Texturerzeugung auf Basis von Bildern einer tragbaren Kamera

Génération de texture de paysage de carte géographique sur la base d'images de caméra portables

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.07.2013 Bulletin 2013/28**

(73) Proprietor: **Harman Becker Automotive Systems
GmbH
76307 Karlsbad (DE)**

(72) Inventor: **Strassenburg-Kleciak, Marek
85748 Garching (DE)**

(74) Representative: **Schwarz, Markku
Kraus & Weisert
Patentanwälte PartGmbB
Thomas-Wimmer-Ring 15
80539 München (DE)**

(56) References cited:
- **RICHARD MADISON ET AL: "Tactical geospatial intelligence from full motion video", APPLIED IMAGERY PATTERN RECOGNITION WORKSHOP (AIPR), 2010 IEEE 39TH, IEEE, 13 October 2010 (2010-10-13), pages 1-6, XP031861104, DOI: 10.1109/AIPR.2010.5759699 ISBN: 978-1-4244-8833-9**
- **SLONECKER ET AL.: "Automated imagery orthorectification pilot", JOURNAL OF APPLIED REMOTE SENSING, vol. 3, 7 October 2009 (2009-10-07), pages 1-16, XP040505723,**
- **CHIPPENDALE P ET AL: "Collective Photography", VISUAL MEDIA PRODUCTION, 2009. CVMP '09. CONFERENCE FOR, IEEE, PISCATAWAY, NJ, USA, 12 November 2009 (2009-11-12), pages 188-194, XP031648065, ISBN: 978-1-4244-5257-6**
- **SZELISKI RICHARD: "Image Alignment and Stitching: A tutorial", INTERNET CITATION, 10 December 2006 (2006-12-10), pages I-II, XP002521144, Retrieved from the Internet: URL:http://pages.cs.wisc.edu/~dyer/ai-qual /szeliski-tr06.pdf [retrieved on 2009-03-20]**
- **ANONYMOUS: 'Galaxy Nexus - Wikipedia, the free encyclopedia', [Online] 31 December 2011, pages 1 - 21, XP055099147 Retrieved from the Internet: <URL:http://en.wikipedia.org/w/index.php?ti tle=Galaxy_Nexus&oldid=468809554> [retrieved on 2014-01-29]**

## Description

Technical Field

The present application relates to a method for generating a landscape texture of a geographical map and to corresponding devices.

Background Art

For generating landscape textures of geographical maps, it is for example known to use aerial or satellite images. In this case a plurality of aerial or satellite images may be registered to as to provide the landscape texture.

In addition, techniques for texturing three-dimensional structures, e.g., buildings or the like, are known. These techniques are based on images obtained by cameras mounted on a vehicle. Here, one example are textures of buildings as used in Google Earth.

However, the above-mentioned techniques may be problematic when the landscape texture includes parts which are not visible in aerial or satellite images. For example, this may be the case in tunnels, under protruding structures of buildings, under dense vegetation, or the like. Moreover, the above techniques for generating landscape textures or surface textures of three-dimensional structures are typically complex and require considerable effort to maintain up-to-date textures. For example, high-resolution cameras need to be mounted on aircrafts or satellites in order to obtain the images for generating the textures.

Accordingly, there is a need for techniques which allow for efficiently generating landscape textures of a geographical map.

In "Tactical Geospatial Intelligence from Full Motion Video" by Richard Madison et al., applied imagery pattern recognition workshop (AIPR) 2010 IEEE (2010) and in "Automated Imagery Orthorectification Pilot" by E. Terrence Slonecker et al., Journal of Applied Remote Sensing, vol. 3 (2009), techniques are described in which aircraft-based image acquisition systems are used for obtaining images and associated position and camera orientation data, which are then used for generating a landscape texture.

In internet publication "Galaxy Nexus - Wikipedia, the free encyclopedia" (http://en.wikipedia.org/w/index. php?title=Galaxy_Nexus&oldid=46880955 4), a smartphone released on November 17, 2011 is described. The smartphone is described to include cameras as well as a barometric height sensor.

Short Summary of the Invention

According to some embodiments of the present invention the above need is addressed by a method and devices as defined in the independent claims. The dependent claims define further embodiments.

According to an embodiment, a method for generating a landscape texture of a geographical map is provided. According to the method, a plurality of images captured from a pedestrian perspective by a plurality of hand-held cameras are obtained via a network interface. In addition, for each of the images additional data are obtained which include a geographical position of the camera when capturing the image, inner camera orientation data representing properties of the camera when capturing the image, exterior camera orientation data representing an orientation of the camera when capturing the image, and a barometric height of the camera when capturing the image. The additional data may for example be obtained from a digital image file in which the additional data are stored together with the captured image.

According to the method, a ground height of the camera above the ground surface at the geographical position of the camera when capturing the image is determined on the basis of the barometric height and the geographical position. By using the barometric height and the geographical position, the ground height may be determined in an accurate manner, for example allowing a height resolution in the range of below 1 m or even below 0.5 m. On the basis of the ground height data, the inner camera orientation data, and the exterior camera orientation data, each of the images is then distorted so as to obtain a projection onto the ground surface at the geographical position at which the image was captured. In this way the distorted images may show the ground surface in a similar fashion as in vertical aerial images. However, a significantly higher resolution can be obtained by capturing the images close to the ground surface.

According to the method, the distorted images are then registered, and the landscape texture is generated from the registered distorted images. Registering the distorted images at generating the landscape texture may also involve averaging overlapping parts of the registered images. Further, the landscape texture may be stored in a suitable format so as to be used for texturing a digital geographical map as for example used in a navigation system. In some embodiments, for each of the images also a time of capturing the image may be obtained, and the landscape texture may be generated taking into account the times of capturing the different images. In this way, it becomes for example possible to vary the landscape texture according to the time of day or according to the season. For example, different landscape textures may be used for day and night or for winter and summer. The landscape texture includes parts which are not visible in aerial or satellite images.

According to an embodiment, the exterior camera orientation data comprise a first angle representing an orientation of an optical axis of the camera with respect to a horizontal plane, and a second angle representing a compass orientation of the optical axis of the camera in the horizontal plane. In this way, the captured images may be efficiently distorted so as to take into account an oblique angle of capturing the images, and the distorted images may be efficiently aligned with respect to each other and also with respect to structures in the geographical map. According to some embodiments, the exterior camera orientation data may also comprise a third angle representing tilting of the camera about the optical axis. In this way, an image sensor of the camera does not need to be perfectly aligned with the horizontal direction when capturing the image so that the number of usable images can be increased and requirements on the user while capturing the image can be relaxed.

According to some embodiments, the inner camera orientation data comprise a focal length, a camera constant, and/or a position of an image principal point. In this way, imaging properties when capturing the image may be accurately taken into account in the process of generating the distorted image. In some embodiments, the inner camera orientation data may also take into account non-ideal imaging properties of the camera, such as optical aberrations.

According to some embodiments, the method may also comprise obtaining, for each of the images, a transformation rule for calculating image point coordinates of the projection from coordinates of the captured image. This transformation rule may be obtained on the basis of the geographical position, the exterior camera orientation data, the interior camera orientation data, and the ground height. Additional parameters such as known or measured optical aberrations of the camera may be taken into account as well. In some embodiments, the transformation rule may be calculated on the basis of the above-mentioned additional data obtained for the image. In some embodiments, the transformation rule or parts thereof may also be stored in association with the captured image, i.e. may be part of the additional data.

In the above embodiments, the images are obtained from a plurality of hand-held cameras via a network interface. In this way, the number of available images for generating the landscape texture may be drastically increased. In particular, it becomes possible to generate the landscape texture on the basis of a "cloud working" process in which a plurality of users may contribute to a network-implemented landscape texture generation process.

A hand-held device may be used to provide the images captured from the pedestrian perspective to be used in the above method for generating the landscape texture. The hand-held device comprises a camera, a satellite positioning device, a plurality of orientation sensors, a barometric height sensor, and a memory for storing an image captured by the camera in association with additional data. These additional data include inner camera orientation data representing properties of the camera when capturing the image, a geographical position of the camera when capturing the image as measured by the satellite positioning device, exterior camera orientation data when capturing the image as measured by the orientation sensors, and a barometric height of the camera when capturing the image as measured by the barometric height sensor. Accordingly, the additional data as used in the above-described method may be measured by the hand-held device and stored in association with the captured image. This storage may for example involve storing the captured image together with the additional data in a digital image file. In some embodiments, also a part of the above-described processing may be accomplished in the hand-held device, e.g., determining the transformation rule or parts thereof, and/or determining the ground height and optionally also distorting the captured image so as to obtain the ground surface projection.

The hand-held device may also comprise an interface for providing the captured image to a device for generating a landscape texture therefrom. This interface may for example be implemented as a network interface allowing collection of captured images and associated additional data from a plurality of hand-held devices. The hand-held device may for example be a mobile phone, a smartphone, a digital camera, or a portable computer device. The orientation sensors may for example comprise accelerometer sensors and/or gyroscopic sensors. The orientation sensors may also comprise a compass orientation sensor.

According to a further embodiment, a device for providing a landscape texture of a geographical map is provided. The device may be configured to perform the above-described method of providing a landscape texture. The device comprises a network interface for obtaining a plurality of images captured from a pedestrian perspective by a plurality of hand-held cameras, and a processor. The processor is configured to obtain, for each of the images, a geographical position of the camera when capturing the image, inner camera orientation data representing properties of the camera when capturing the image, exterior camera orientation data representing an orientation of the camera when capturing the image, and a barometric height of the camera when capturing the image. The processor is further configured to determine, on the basis of the barometric height and the geographical position of the camera when capturing the image, a ground height of the camera above a ground surface at the geographical position of the camera when capturing the image. Additionally, the processor is configured to distort, on the basis of the ground height data, each of the images so as to obtain a projection onto the ground surface at the geographical position at which the image was captured. Further, the processor is configured to register the distorted images and generate the landscape texture from the registered distorted images. The landscape texture includes parts which are not visible in aerial or satellite images. The interface of the device may be a network interface configured to obtain the images from a plurality of hand-held cameras.

Further embodiments and features thereof as well as accompanying advantages, will become apparent from the following detailed description of embodiments in connection with the drawings.

Brief Description of the Drawings

Fig. 1 schematically illustrates a side view of a constellation for capturing an image as used according to an embodiment of the invention.

Fig. 2 schematically illustrates a top view of a constellation for capturing an images as used according to an embodiment of the invention.

Fig. 3 schematically illustrates an axial view of a constellation for capturing an image as used according to an embodiment of the invention.

Fig. 4 shows a flow chart for schematically illustrating a method, which may be used in an embodiment of the invention for providing images.

Fig. 5 shows a flowchart for schematically illustrating a further method according to an embodiment of the invention, which may be used for generating a landscape texture from a plurality of images.

Fig. 6 shows a block diagram for schematically illustrating a hand-held device which may be used in an embodiment of the invention.

Fig. 7 shows a block diagram for schematically illustrating a device for generating a landscape texture of a geographical map according to an embodiment of the invention.

Fig. 8 shows exemplary captured images as used in a process of generating a landscape texture according to an embodiment of the invention.

Fig. 9 shows an example of a landscape texture as generated by distorting and registering the images of Fig. 8.

Fig. 10 shows an example of a large-area landscape texture as generated by registering distorted images captured at a plurality of different geographical positions.

Detailed Description of Preferred Embodiments

In the following, embodiments of the invention will be described with reference to the drawings. It should be noted that features of different embodiments as described herein may be combined with each other as appropriate. The embodiments relate to methods and devices for generating a landscape texture of a geographical map. As will be further explained in the following, this may be efficiently accomplished by capturing a plurality of images using hand-held devices equipped with a camera and sensors for measuring additional data when capturing an image. These hand-held devices may for example be mobile phones, smartphones, digital cameras or portable computer devices, and the captured images may be collected via a network interface, e.g. via the Internet. In the embodiments as explained in the following, the hand-held device may be used for capturing the images from a pedestrian's perspective, i.e., from a height of about 1 m to 5 m above the ground surface. Accordingly, the images may be captured from a close distance to the ground surface, thereby obtaining a high resolution image of the ground surface and avoiding the risk of parts of the ground surface being obstructed.

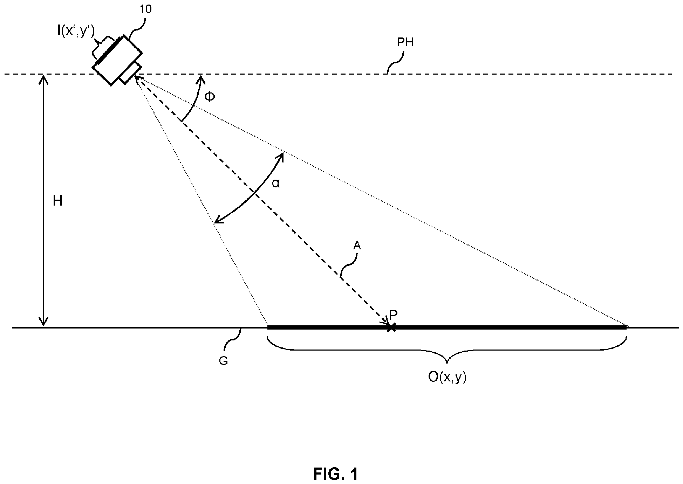

An exemplary constellation of capturing an image using a hand-held device is illustrated in Fig. 1. As can be seen, the hand-held device is held at a certain ground height H above a ground surface G. The ground surface G corresponds to a certain area in the geographical map for which the landscape texture is to be generated. The hand-held device 10 is equipped with a camera having an optical axis A. As can be seen, the optical axis A extends at an oblique angle $\Phi$ with respect to a horizontal plane HP. The horizontal plane HP is assumed to be defined as a plane which extends perpendicular to the direction of gravity. Accordingly, the angle $\Phi$ can be measured by an accelerometer sensor of the hand-held device 10. Alternatively, other types of orientation sensors could be used for measuring the angle $\Phi$, e.g., a gyroscopic orientation sensor or the like. In the illustrated example, the ground surface G is illustrated as being parallel to the horizontal plane PH. However, it is to be understood that this is not necessary. In other constellations, the ground surface G could be arranged at an oblique angle with respect to the horizontal plane HP or could have a non-flat geometry. The orientation or detailed geometrical configuration of the ground surface G may be known from a geographical map database.

Capturing the image involves measuring intensities at image coordinates x', y' in an image space I. In the following, it is assumed that this is accomplished by means of a pixel-based sensor. The measured intensities correspond to points in an object space O. Coordinates in the object space are illustrated as being measured by coordinates x, y.

Due to internal properties of the camera of the hand-held device 10, in the following referred to as inner orientation of the camera, and due to orientation of the camera with respect to the ground surface G, in the following referred to as exterior orientation, there exists a certain transformation rule which allows for relating a point having coordinates x', y' in the image space I to a corresponding point having coordinates x, y in the object space. In the illustrated example, the inner orientation of the camera is illustrated as an opening angle $\alpha$ of the camera lens. However, it is to be understood that typically a number of characteristic parameters may be used for representing the inner orientation of the camera when capturing the image. Such parameters are, e.g., a focus length of the camera, a camera constant of the camera, and/or a location of an image principal point in the image space I. In Fig. 1 a point in the object space O corresponding to the image principal point is illustrated as P. This point P, which may also be referred to as object principal point, may be regarded as representing a center of a projection of the captured image onto the ground surface G. For example, the coordinates x, y may be measured with respect to the object principal point P and the coordinates x', y' may be measured with respect to the image principal point. Due to the oblique angle $\Phi$ between the optical axis A of the camera and the horizontal plane or more generally the ground surface G, the relation of the distance between two points in the object space to the distance between the two corresponding image points in the image space I depends on the coordinates of the points in the object space O. Accordingly, the captured image is distorted with respect to an image as would be generated from a perfectly vertical perspective.

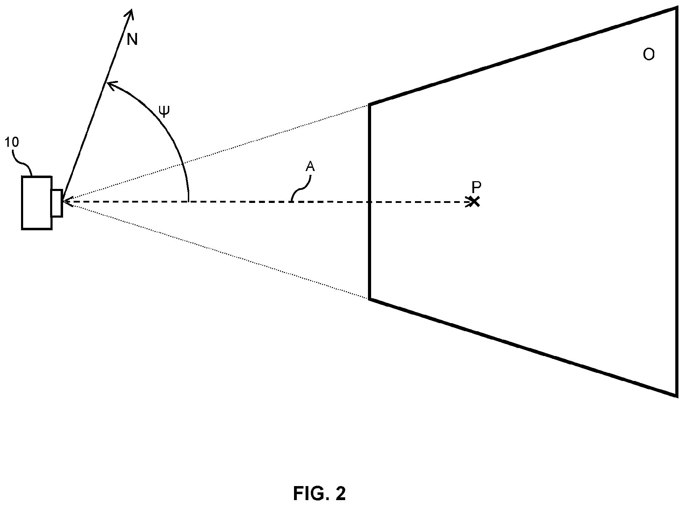

This distortion is also visible in Fig. 2, which shows a top view of the constellation of Fig. 1. In Fig. 1, a region of the object space O which corresponds to a substantially rectangular region in the image space I is shown as a trapezoid.

Further, Fig. 2 illustrates an orientation of the optical axis A with respect to a compass direction, in the illustrated example the north direction denoted by N. This orientation is measured by an angle $\Psi$. The angle $\Psi$ may be measured by a compass orientation sensor of the hand-held device 10.

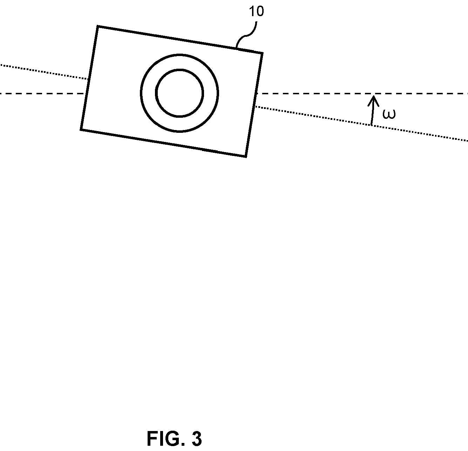

In addition, the orientation of the camera in the hand-held device 10 may also vary by tilting about the optical axis A. This is further illustrated in Fig. 3 which shows a front view of the hand-held device 10, in which the optical axis A extends perpendicular to the plane of the illustration. This tilting of the camera may be represented by an angle $\omega$. The angle $\omega$ may be measured by an accelerometer sensor or by other types of orientation sensors, e.g., by gyroscopic orientation sensors.

On the basis of the inner orientation and the exterior orientation and further taking into account the ground height H, a transformation rule for obtaining coordinates x, y of a point in the object space O from the coordinates x', y' of the corresponding image point in the image space I may be determined. In mathematical terms this may be written by using a transformation matrix F depending on the inner orientation $\alpha$, the exterior orientation as defined by the angles $\Phi$, $\Psi$ and $\omega$, and by the ground height H:

$$\begin{pmatrix} x \\ y \end{pmatrix} = \mathbf{F}\left(H, \phi, \alpha, \psi, \omega\right) \begin{pmatrix} x' \\ y' \end{pmatrix}$$

Here, it is to be understood that the ground height H specifically influences the scaling between an object in the object space O and its image in the image space I. Since the images are captured by pedestrians using the hand-held device, a typical ground height H is in the range of a few meters, e.g., between 1m and 5m. Accordingly, in order to be able to accurately assess the distortions in the captured image, an accurate knowledge of the ground height H is desirable. Accordingly, concepts as described herein involve determining the ground height H on the basis of a barometric height of the camera, as measured by a barometric height sensor in the hand-held device 10. From the barometric height and the geographical position of the camera when capturing the image, in particular a height of the ground surface G above sea level, the ground height H can be accurately determined. Accordingly, also the transformation rule relating the coordinates x', y' of image points in the image space I to the coordinates x, y of the corresponding points in the object space O can be accurately determined. Details of suitable procedures for determining the transformation rule may be similar as in known photogrammetric techniques.

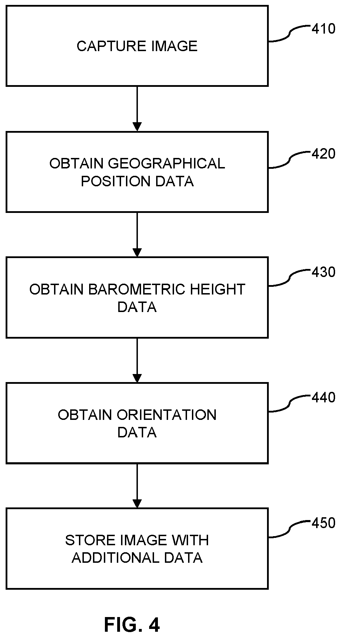

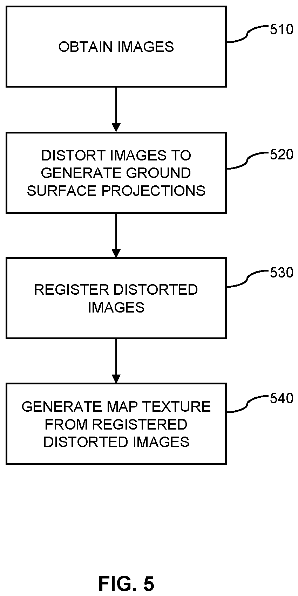

The transformation rule may then be used for distorting the captured image so as to obtain a projection onto the ground surface G. In this way, the distorted image has similar properties as an image captured from a vertical perspective. Accordingly, the distorted image is specifically useful for generating a landscape texture. For this purpose, the distorted image may be registered with other distorted images. Corresponding methods of capturing an image and measuring additional data to be used for distorting the captured image and for generating a landscape texture therefrom will now be further explained in connection with the flowcharts Figs. 4 and 5.

In the method of Fig. 4, an image is captured by a hand-held device, e.g. the hand-held device 10 of Figs. 1-3, at step 410. The image is captured from a pedestrian perspective. For this purpose, when capturing the image, the hand-held device 10 may be held by a pedestrian. Accordingly, the image may be captured at a close distance to the ground surface. In this way, a high-resolution image of the ground surface can be generated irrespectively of using a low-complexity camera in the hand-held device 10.

At step 420, geographical position data representing the geographical position of the camera when capturing the image are obtained. This may be accomplished by using a satellite positioning device of the hand-held device. e.g. a Global Positioning System (GPS) receiver. The geographical position may for example be defined in terms of a geographic latitude and longitude. In addition, the geographical position data may also comprise an elevation.

At step 430, barometric height data are obtained. The barometric height data may for example be measured by a barometric height sensor of the hand-held device. The measurement of the barometric height may also involve a calibration of the barometric height sensor using a reference height above sea level and a barometric pressure as measured at the reference height. Further, the calibration may also take into account the local temperature at the position of the hand-held device, e.g. as measured by a temperature sensor of the hand-held device.

At step 440, orientation data of the camera in the hand-held device are obtained. These orientation data on the one hand may include exterior orientation data, in particular a first angle representing an orientation of the optical axis of the camera with respect to a horizontal plane, such as the angle $\Phi$ of Fig. 1, and a second angle representing a compass orientation of the optical axis of the camera in the horizontal plane, such as the angle $\Psi$ in Fig. 2. In addition, the orientation data may also comprise a third angle representing tilting of the camera in the hand-held device about its optical axis, such as the angle $\omega$ of Fig. 3. The first angle and the third angle may for example be measured by accelerometer sensors or other types of orientation sensor, e.g. gyroscopic sensors. The second angle may for example be measured by a compass orientation sensor of the hand-held device.

At step 450, the captured image is stored in association with the additional data as obtained at step 420 and 430. This may be accomplished by storing the additional data as further parameters of a digital image file used for storing the captured image. Alternatively, the additional data could also be stored in a separate database.

The stored captured images and the associated additional data may then be used as inputs for generating the landscape texture of a geographical map. For this purpose, the stored images and associated additional data may be transferred to a further device, e.g., to a network server. In this way, a plurality of images as captured by various hand-held devices may be used in the process of generating the landscape texture.

The process of generating the landscape texture from the images and the associated additional data is further illustrated by the method of Fig. 5. As mentioned above, the method of Fig. 5 may be implemented in a network server which receives the captured images and associated additional data via a network interface.

At step 510, a plurality of captured images are obtained. The images are captured by one or more hand-held devices, typically a plurality of different hand-held devices. The images are captured from a pedestrian perspective. Together with the captured images, also additional data reflecting conditions when capturing the image are obtained for each of the captured images. These additional data may in particular include the geographical position of the camera when capturing the image, inner camera orientation data representing properties of the camera when capturing the image, e.g., focal length, camera constant and/or position of image principal point. The additional data further include exterior camera orientation data, e.g., the first angle, second angle and/or third angle as determined at step 440 of Fig. 4. Further, the additional data include a barometric height of the camera when capturing the image, e.g., as obtained at step 430 of Fig. 4.

At step 520, the captured images are distorted so as to generate ground surface projections therefrom. For this purpose, a transformation rule relating image points in the image space to corresponding points in the object space may be determined. This is accomplished on the basis of the additional data, in particular the geographical position of the camera, the inner camera orientation data, the exterior camera orientation data, and the barometric height of the camera when capturing the image. This may in particular include determining a ground height of the camera above the ground surface from the barometric height and the geographical position of the camera when capturing the image. The distorted images may have similar properties as images captured from a vertical perspective.

At step 530, the distorted images are registered. For this purpose, known image registration techniques may be used. Further, it is also possible to perform averaging of overlapping parts of the registered images, thereby increasing accuracy of registration or increasing detail resolution.

At step 540, the landscape texture is generated from the registered distorted images. This may for example involve storing the landscape texture as additional attribute in a geographical map database. Further, this may also include transformation of the registered images or parts thereof into a suitable data format. In addition, different landscape textures corresponding to different scenarios may be generated, e.g. a landscape texture corresponding to daylight conditions, a landscape texture corresponding to night conditions, a landscape texture corresponding to winter conditions and/or a landscape texture corresponding to summer conditions. For this purpose, also the time of capturing the image may be obtained at step 510.

As explained above, the methods of Figs. 4 and 5 may be combined with each other by using the hand-held device for capturing the images and measuring the associated additional data, whereas processing of the captured images is accomplished by another device implementing the method of Fig. 5, e.g., a network server. However, this distribution of functionalities may also be altered. For example, also the hand-held device could do some initial processing of the captured images, e.g., by determining the ground height and storing the determined ground height as additional data in association with the captured image. Further, also distortion of the captured images could be accomplished by the hand-held device. That is to say, steps 510 and 520 of Fig. 5 could be accomplished for each captured image by the hand-held device.

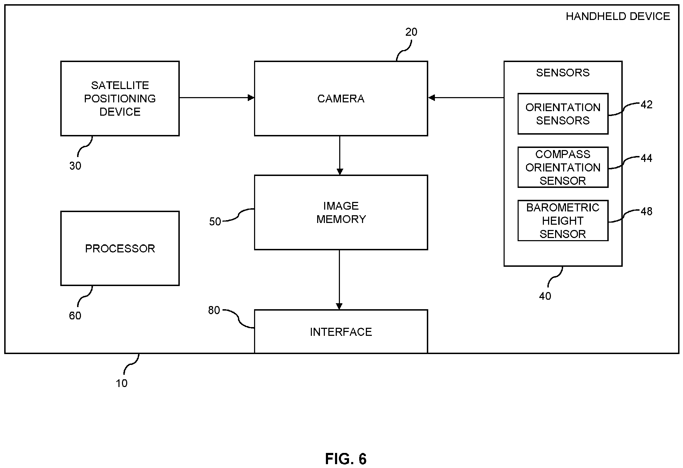

Fig. 6 shows a block diagram for schematically illustrating a hand-held device which may be used in the above procedures of generating a landscape texture. The hand-held device 10 of Fig. 6 may in particular correspond to the hand-held device as illustrated in Figs. 1-3.

The hand-held device 10 may be a mobile phone, a smartphone, a digital camera, or a portable computer device.

As illustrated, the hand-held device 10 is equipped with a camera 20, a satellite positioning device 30, e.g., a GPS receiver or other satellite positioning receiver, a number of sensors 40, an image memory 50, a processor 60, and an interface 80.

The camera 20 may be used to capture one or more images to be used as input for generating a landscape texture. For this purpose, the hand-held device 10 is held by a pedestrian, thereby capturing the image at close distance to the ground surface. The camera 20 may be based on a digital implementation using pixel-based sensor.

The satellite positioning device 30 may be used to obtain the geographical position of the hand-held device 10 and its camera 20 when capturing the image. Corresponding geographical position data, e.g., in terms of latitude, longitude and optionally also elevation may be supplied to the camera 20.

Further, the sensors 40 may be used to obtain various types of orientation data. In particular, orientation sensors 42 based on accelerometer sensors or gyroscopic sensors may be used for determining an orientation of the optical axis of the camera 20 with respect to a horizontal plane and/or for determining tilting of the camera 20 about its optical axis, e.g., as represented by the angles $\Phi$ and $\omega$ of Figs. 1 and 3. In addition, a compass orientation sensor 44 may be used for determining an orientation of the optical axis of the camera with respect to a compass direction, e.g. as illustrated by the angle $\Psi$ of Fig. 2.

In addition, the sensors 40 also include a barometric height sensor 48. The barometric height sensor 48 may be used to determine the barometric height of the hand-held device 10 and its camera 20 when capturing the image. The data as measured by the sensors 40 are provided to the camera 20. The camera 20 may include the additional data as obtained by the satellite positioning device 30 and the sensors 40 into a digital image file used for storing the captured image. The digital image file may then be stored in the image memory 50. From the image memory 50, the stored captured image and its associated additional data may be retrieved and output from the hand-held device 10 using the interface 80. The interface 80 may be a network interface.

The overall operations of the hand-held device 10 may be controlled by the processor 60.

Accordingly, the hand-held device 10 as illustrated in Fig. 6 may be used for implementing the method as illustrated in Fig. 4.

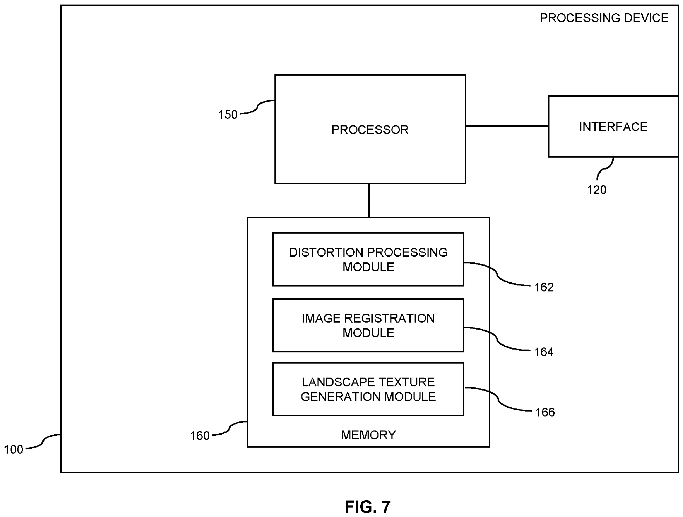

Fig. 7 shows a block diagram for schematically illustrating a processing device 100 for generating a landscape texture using the above-described procedures. The processing device 100 may for example be a network server capable of communicating with a plurality of hand-held devices, e.g., of the type as illustrated in Fig. 6.

As illustrated, the processing device 100 is equipped with an interface 120, a processor 150, and a memory 160. The memory 160 may in particular be used for storing program code modules 162, 164, 166 to be executed by the processor 150. By using the program code modules 162, 164, 166, the processor 150 may be configured to implement steps of a method as illustrated in Fig. 5. For this purpose, the memory may in particular include a distortion processing module 162 to distort captured images as obtained via the interface 120. For this purpose, the distortion processing module 162 may implement procedures as explained in connection with step 520 of Fig. 5.

Further, the memory 160 may include an image registration module 164 for performing registration of the distorted images as provided by the distortion processing module 162. For this purpose, the image registration module 164 may implement procedures as explained in connection with step 530 of Fig. 5.

Further, the memory 160 may include a landscape texture generation module 166 for generating the landscape texture from the registered images as provided by the image registration module 164. For this purpose, the landscape texture generation module may implement procedures as described in connection with step 540 of Fig. 5.

It is to be understood that the processing device 100 may actually include further structures which were not illustrated for the sake of clarity. For example, the memory 160 could include further types of programme code modules for implementing known functionalities for maintaining or generating geographical map databases.

As mentioned above, the interface 120 may be used for obtaining a plurality of captured images and associated additional data from a plurality of different hand-held devices. For this purpose, the interface 120 may in particular be implemented as a network interface. For example, the interface 120 could connect to the Internet, and the hand-held devices could provide the captured image data and associated additional data via the Internet. For this purpose, the hand-held devices may directly connect to the Internet or connect to the Internet via an intermediate device, e.g., a computer which receives the captured image data and associated additional data from the hand-held device via a local synchronisation interface.

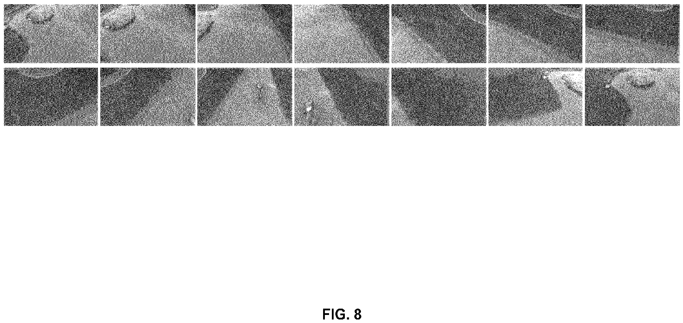

Fig. 8 shows exemplary captured images as generated in accordance with the above principles. As can be seen, the images illustrate an outdoor scenario. The images were taken by a pedestrian using a hand-held device. In the illustrated sequence of images the geographical position of the pedestrian while capturing the images was not varied. However, the photographing direction, i.e. the compass direction of the optical axis of the camera was varied so as to obtain views in different directions.

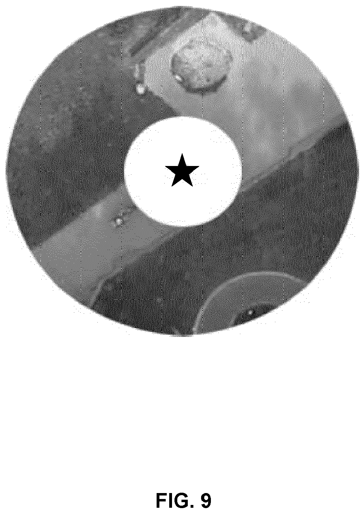

Fig. 9 shows an exemplary combined image as generated by distorting the images of Fig. 8 and registering the distorted images using the above principles. In Fig. 9 the geographical position of the pedestrian while capturing the images of Fig. 8 is illustrated by a star.

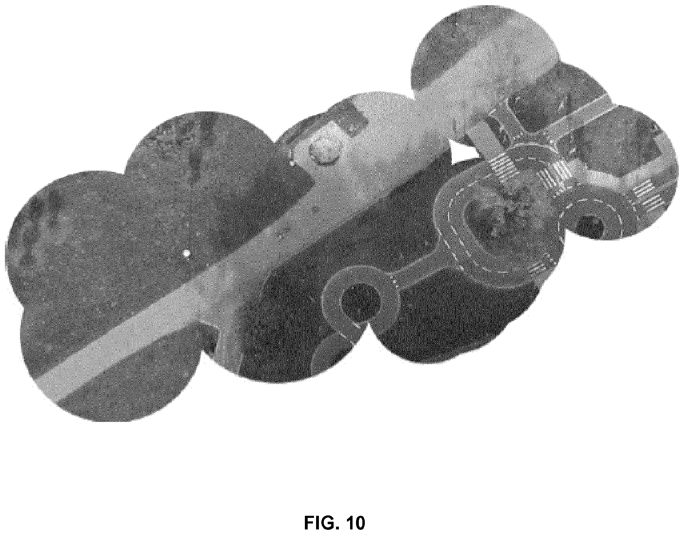

Fig. 10 illustrates a further combined image generated by distorting images captured at different geographical positions so as to obtain a large-area combined image. As can be seen from Figs. 9 and 10, the combined images have similar properties as images generated from a vertical perspective and can therefore be used as landscape textures. However, the procedures for generating the combined images do not require bringing the camera into a vertical photographing position and therefore significantly simplify the generation of landscape textures.

It should be noted that the examples and embodiments as explained above have the purpose of illustrating concepts according to some embodiments of the present invention and are susceptible to various modifications. For example, various types of hand-held devices may be used for capturing the images as long as they are provided with a camera and suitable sensors for obtaining the additional data. The captured images may be obtained from a single type of hand-held device or from different types of hand-held devices. Moreover, various optical models may be applied for generating the distorted images from the captured images. Such models may be based on linear optics, but may also take into account non-linear optical effects. Such models may also be selected corresponding to the type of the camera of each individual hand-held device.

## Claims

1. A computer-implemented automated method for providing a landscape texture of a geographical map, comprising:

   obtaining, via a network interface, a plurality of images captured from a pedestrian perspective by a plurality of handheld cameras (20); obtaining, for each of the images:

   - a geographical position of the camera (20) when capturing the image;
   - inner camera orientation data representing properties of the camera (20) when capturing the image and comprising a focal length, a camera constant, and/or a position of an image principal point,
   - exterior camera orientation data representing an orientation of the camera (20) when capturing the image, and
   - a barometric height of the camera (20) when capturing the image;

   determining, on the basis of the barometric height and the geographical position, a ground height of the camera above a ground surface at the geographical position of the camera (20) when capturing the image;
   on the basis of the ground height, the inner camera orientation data, and the exterior camera orientation data, distorting each of the images so as to obtain a projection onto the ground surface at the geographical position at which the image was captured;
   registering the distorted images; and generating the landscape texture from the registered distorted images,

   wherein the landscape texture includes parts which are not visible in aerial or satellite images.

2. The method according to claim 1, wherein the exterior camera orientation data comprise a first angle representing an orientation of an optical axis (A) of the camera (20) with respect to a horizontal plane (PH), and a second angle representing a compass orientation of the optical axis (A) of the camera (20) in the horizontal plane.

3. The method according to claim 2, wherein the exterior camera orientation data comprise a third angle representing tilting of the camera (20) about the optical axis (A).

4. The method according to any one of the preceding claims, comprising:

   obtaining, for each of the images, a transformation rule for calculating image point coordinates of the projection from coordinates of the captured image.

5. The method according to any one of the preceding claims, comprising:

   obtaining, for each of the images, a time of capturing the image; and generating the landscape texture taking into account the times of capturing the images.

6. The method according to any one of the preceding claims, comprising:

   averaging overlapping parts of the registered images.

7. A device (100) for providing a landscape texture of a geographical map, comprising:

   a network interface (120) for obtaining a plurality of images captured from a pedestrian perspective by a plurality of handheld cameras (20); and a processor (150),

wherein the processor (150) is configured to:

obtain, for each of the images:

- a geographical position of the camera (20) when capturing the image,
- inner camera orientation data representing properties of the camera (20) when capturing the image and comprising a focal length, a camera constant, and/or a position of an image principal point,
- exterior camera orientation data representing an orientation of the camera (20) when capturing the image, and
- a barometric height of the camera (20) when capturing the image;

determine, on the basis of the barometric height and the geographical position of the camera (20), a ground height of the camera (20) above a ground surface at the geographical position of the camera (20) when capturing the image; on the basis of the ground height data, distort each of the images so as to obtain a projection onto the ground surface at the geographical position at which the image was captured; register the distorted images; and generate the landscape texture from the registered distorted images, wherein the landscape texture includes parts which are not visible in aerial or satellite images.

**8.** The device according to claim 7, wherein the processor is configured to perform steps of a method as defined by any one of claims 1 to 6.


**Patentansprüche**

**1.** Computerimplementiertes automatisiertes Verfahren zum Bereitstellen einer Landschaftsoberflächenstruktur einer geografischen Karte, das Folgendes umfasst:

Erhalten, mittels einer Netzwerkschnittstelle, einer Vielzahl an Bildern, die von einer Fußgängerperspektive aus durch eine Vielzahl an tragbaren Kameras (20) aufgenommen werden; Erhalten für jedes dieser Bilder:

- einer geografischen Position der Kamera (20), wenn sie das Bild aufnimmt;
- von Innenkameraausrichtungsdaten, die Eigenschaften der Kamera (20) angeben, wenn sie das Bild aufnimmt, und eine Brennweite, eine Kamerakonstante und/oder eine Position eines Bildbrennpunktes umfassen,
- von Außenkameraausrichtungsdaten, die eine Ausrichtung der Kamera (20) angeben, wenn sie das Bild aufnimmt, und
- einer barometrischen Höhe der Kamera (20), wenn sie das Bild aufnimmt;

Bestimmen einer Bodenhöhe der Kamera über einer Bodenoberfläche an der geografischen Position der Kamera (20), wenn sie das Bild aufnimmt, basierend auf der barometrischen Höhe und der geografischen Position; Verzerren jedes der Bilder, basierend auf der Bodenhöhe, den Innenkameraausrichtungsdaten und den Außenkameraausrichtungsdaten, um eine Projektion auf die Bodenoberfläche an der geographischen Position zu erhalten, an der das Bild aufgenommen wurde; Registrieren der verzerrten Bilder; und Erzeugen der Landschaftsoberflächenstruktur aus den registrierten verzerrten Bildern, wobei die Landschaftsoberflächenstruktur Teile einschließt, die auf Luft- oder Satellitenbildern nicht sichtbar sind.

**2.** Verfahren nach Anspruch 1, wobei die Außenkameraausrichtungsdaten einen ersten Winkel, der eine Ausrichtung einer optischen Achse (A) der Kamera (20) in Bezug auf eine horizontale Ebene (PH) angibt, und einen zweiten Winkel umfassen, der eine Kompassausrichtung der optischen Achse (A) der Kamera (20) in der horizontalen Ebene angibt.

**3.** Verfahren nach Anspruch 2, wobei die Außenkameraausrichtungsdaten einen dritten Winkel umfassen, der die Neigung der Kamera (20) zur optischen Achse (A) angibt.

**4.** Verfahren nach einem der vorhergehenden Ansprüche, das Folgendes umfasst:

Erhalten einer Transformationsregel für jedes der Bilder zum Berechnen von Bildpunktkoordinaten der Projektion aus den Koordinaten des aufgenommenen Bildes.

**5.** Verfahren nach einem der vorhergehenden Ansprüche, das Folgendes umfasst:

Erhalten einer Zeit des Aufnehmens des Bildes für jedes der Bilder; und Erzeugen der Landschaftsoberflächenstruktur unter Einbeziehung der Zeiten des Aufnehmens der Bilder.

**6.** Verfahren nach einem der vorhergehenden Ansprüche, das Folgendes umfasst:

Mitteln von sich überschneidenden Teilen der registrierten Bilder.

**7.** Vorrichtung (100) zum Bereitstellen einer Landschaftsoberflächenstruktur einer geografischen Karte, die Folgendes umfasst:

eine Netzwerkschnittstelle (120) zum Erhalten einer Vielzahl an Bildern, die von einer Fußgängerperspektive aus durch eine Vielzahl an tragbaren Kameras (20) aufgenommen werden; und einen Prozessor (150),

wobei der Prozessor (150) konfiguriert ist, um:

für jedes der Bilder Folgendes zu erhalten:

- eine geografische Position der Kamera (20), wenn sie das Bild aufnimmt,
- Innenkameraausrichtungsdaten, die Eigenschaften der Kamera (20) angeben, wenn sie das Bild aufnimmt, und die eine Brennweite, eine Kamerakonstante und/oder eine Position eines Bildbrennpunktes umfassen,
- Außenkameraausrichtungsdaten, die eine Ausrichtung der Kamera (20) angeben, wenn sie das Bild aufnimmt, und
- eine barometrische Höhe der Kamera (20), wenn sie das Bild aufnimmt;

basierend auf der barometrischen Höhe und der geografischen Position der Kamera (20), eine Bodenhöhe der Kamera (20) über einer Bodenoberfläche an der geografischen Position der Kamera (20), wenn sie das Bild aufnimmt, zu bestimmen;
basierend auf den Bodenhöhendaten, jedes der Bilder zu verzerren, um eine Projektion auf die Bodenoberfläche an der geografischen Position, an der das Bild aufgenommen wurde, zu erhalten;
die verzerrten Bilder zu registrieren; und
die Landschaftsoberflächenstruktur aus den registrierten verzerrten Bildern zu erzeugen, wobei die Landschaftsoberflächenstruktur Teile einschließt, die auf Luft- oder Satellitenbildern nicht sichtbar sind.

**8.** Vorrichtung nach Anspruch 7,
wobei der Prozessor konfiguriert ist, um Schritte eines Verfahrens nach einem der Ansprüche 1 bis 6 durchzuführen.

**Revendications**

**1.** Procédé automatisé mis en oeuvre par ordinateur pour fournir une texture de paysage d'une carte géographique, comprenant :

l'obtention, par le biais d'une interface de réseau, d'une pluralité d'images capturées à partir d'une perspective piétonnière par une pluralité de caméras portatives (20) ;
l'obtention, pour chacune des images :

- d'une position géographique de la caméra (20) quand elle capture l'image ;
- de données d'orientation de caméra internes représentant des propriétés de la caméra (20) quand elle capture l'image et comprenant une longueur focale, une constante de caméra et/ou une position d'un point principal d'image,
- de données d'orientation de caméra externes représentant une orientation de la caméra (20) quand elle capture l'image, et
- d'une altitude barométrique de la caméra (20) quand elle capture l'image ;

la détermination, sur la base de l'altitude barométrique et de la position géographique, d'une hauteur par rapport au sol de la caméra au-dessus d'une surface du sol dans la position géographique de la caméra (20) quand elle capture l'image ;
sur la base de la hauteur par rapport au sol, des données d'orientation de caméra internes et des données d'orientation de caméra externes, la déformation de chacune des images de manière à obtenir une projection sur la surface du sol dans la position géographique dans laquelle l'image a été capturée ;
l'enregistrement des images déformées ; et
la génération de la texture de paysage pour les images déformées enregistrées, dans lequel la texture de paysage comprend des parties qui ne sont pas visibles dans des images aériennes ou satellitaires.

**2.** Procédé selon la revendication 1,
dans lequel les données d'orientation de caméra extérieures comprennent un premier angle représentant une orientation d'un axe optique (A) de la caméra (20) par rapport à un plan horizontal (PH) et un deuxième angle représentant une orientation boussole de l'axe optique (A) de la caméra (20) dans le plan horizontal.

**3.** Procédé selon la revendication 2,
dans lequel les données d'orientation de caméra extérieures comprennent un troisième angle représentant une inclinaison de la caméra (20) par rapport à l'axe optique (A).

**4.** Procédé selon l'une quelconque des revendications précédentes, comprenant :

l'obtention, pour chacune des images, d'une règle de transformation pour calculer des coordonnées de points d'image de la projection à partir de coordonnées de l'image capturée.

**5.** Procédé selon l'une quelconque des revendications précédentes, comprenant :

l'obtention, pour chacune des images, d'un instant de capture de l'image ; et
la génération de la texture de paysage en tenant compte des instants de capture des images.

**6.** Procédé selon l'une quelconque des revendications précédentes, comprenant :

le fait de faire la moyenne des parties superposées des images enregistrées.

**7.** Dispositif (100) pour fournir une texture de paysage d'une carte géographique, comprenant :

une interface de réseau (120) pour obtenir une pluralité d'images à partir d'une perspective piétonnière par une pluralité de caméras portatives (20) ; et
un processeur (150),

dans lequel le processeur (150) est configuré pour :

obtenir, pour chacune des images :

- une position géographique de la caméra (20) quand elle capture l'image,
- des données d'orientation de caméra internes représentant des propriétés de la caméra (20) quand elle capture l'image et comprenant une longueur focale, une constante de caméra et/ou une position d'un point principal d'image,
- des données d'orientation de caméra externes représentant une orientation de la caméra (20) quand elle capture l'image, et
- une altitude barométrique de la caméra (20) quand elle capture l'image ;

déterminer, sur la base de l'altitude barométrique et de la position géographique de la caméra (20), une hauteur par rapport au sol de la caméra (20) au-dessus d'une surface du sol dans la position géographique de la caméra (20) quand elle capture l'image ;
sur la base de la hauteur par rapport au sol, déformer chacune des images de manière à obtenir une projection sur la surface du sol dans la position géographique dans laquelle l'image a été capturée ;
enregistrer les images déformées ; et
générer la texture de paysage pour les images déformées enregistrées, dans lequel la texture de paysage comprend des parties qui ne sont pas visibles dans des images aériennes ou satellitaires.

**8.** Dispositif selon la revendication 7,
dans lequel le processeur est configuré pour exécuter les étapes d'un procédé selon l'une quelconque des revendications 1 à 6.

**FIG. 1**

**FIG. 2**

**FIG. 3**

```
┌─────────────────────────┐
│                         │── 410
│      CAPTURE IMAGE      │
│                         │
└─────────────────────────┘
            │
            ▼
┌─────────────────────────┐
│   OBTAIN GEOGRAPHICAL   │── 420
│      POSITION DATA      │
│                         │
└─────────────────────────┘
            │
            ▼
┌─────────────────────────┐
│  OBTAIN BAROMETRIC HEIGHT│── 430
│           DATA          │
│                         │
└─────────────────────────┘
            │
            ▼
┌─────────────────────────┐
│    OBTAIN ORIENTATION   │── 440
│           DATA          │
│                         │
└─────────────────────────┘
            │
            ▼
┌─────────────────────────┐
│    STORE IMAGE WITH     │── 450
│    ADDITIONAL DATA      │
│                         │
└─────────────────────────┘
```

**FIG. 4**

```
        ┌─────────────────────────┐
        │                         │⟋⎺510
        │     OBTAIN IMAGES       │
        │                         │
        └─────────────────────────┘
                    │
                    ▼
        ┌─────────────────────────┐
        │    DISTORT IMAGES TO     │⟋⎺520
        │    GENERATE GROUND       │
        │   SURFACE PROJECTIONS    │
        └─────────────────────────┘
                    │
                    ▼
        ┌─────────────────────────┐
        │   REGISTER DISTORTED     │⟋⎺530
        │        IMAGES            │
        │                         │
        └─────────────────────────┘
                    │
                    ▼
        ┌─────────────────────────┐
        │  GENERATE MAP TEXTURE    │⟋⎺540
        │   FROM REGISTERED        │
        │   DISTORTED IMAGES       │
        └─────────────────────────┘
```

**FIG. 5**

FIG. 6

EP 2 613 295 B1

PROCESSING DEVICE

150 — PROCESSOR

INTERFACE

120

DISTORTION PROCESSING MODULE

162

IMAGE REGISTRATION MODULE

164

LANDSCAPE TEXTURE GENERATION MODULE

166

160 — MEMORY

100

FIG. 7

18

FIG. 8

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **RICHARD MADISON et al.** Tactical Geospatial Intelligence from Full Motion Video. *applied imagery pattern recognition workshop (AIPR) 2010 IEEE,* 2010

- **E. TERRENCE SLONECKER et al.** Automated Imagery Orthorectification Pilot. *Journal of Applied Remote Sensing,* 2009, vol. 3
- Galaxy Nexus - Wikipedia, the free encyclopedia. 17 November 2011